# EUROPÄISCHE PATENTSCHRIFT

(11) **EP 2 731 477 B1**
(45) Veröffentlichungstag und Bekanntmachung des Hinweises auf die Patenterteilung: **14.09.2016**
(21) Anmeldenummer: 12728575.7
(22) Anmeldetag: 20.06.2012
(51) Int. Cl.: A47J 31/40, A47J 31/06, A47J 31/36

(54) **Verfahren zum Extrahieren einer Substanz aus einer Portionskapsel**
Process for extracting an ingredient of a portion capsule
Procédé d'extraction d'une substance d'une capsule dosette

(30) Priorität: 13.07.2011 DE 102011107690
(43) Veröffentlichungstag der Anmeldung: 21.05.2014
(73) Patentinhaber: Eugster/Frismag AG, 8580 Amriswil (CH)
(72) Erfinder: FISCHER, Daniel, CH-8590 Romanshorn (CH); SONDEREGGER, Remo, CH-8274 Tägerwilen (CH)
(74) Vertreter: Loock, Jan Pieter
(86) Internationale Anmeldenummer: PCT/EP2012/061844
(87) Internationale Veröffentlichungsnummer: WO 2013/007487

(56) Entgegenhaltungen:
- EP-A1- 1 518 484
- EP-A1- 2 133 008
- WO-A1-2007/016977

## Beschreibung

Die vorliegende Erfindung betrifft eine Brühvorrichtung mit einer Brühkammer zum Extrahieren und/oder Lösen einer in einer Portionskapsel vorgesehenen Substanz, wobei die Brühkammer ein erstes Brühkammerelement und ein zweites Brühkammerelement aufweist und das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, bewegbar ist und jedes Brühkammerelement jeweils ein Perforationsmittel aufweist, wobei mit dem ersten Perforationsmittel der Kapseldeckel und mit dem zweiten Perforationsmittel der Bodenbereich der Portionskapsel anstechbar ist. Desweiteren betrifft die vorliegende Erfindung ein Verfahren zum Extrahieren und/oder Auflösen einer Substanz, die in einer Portionskapsel vorgesehen ist, wobei die Portionskapsel auf ihrer Zulaufseite und auf ihrer Ablaufseite geöffnet wird.

Der Stand der Technik kennt beispielsweise aus der Druckschrift WO 2007 / 016977 eine Vorrichtung zum Extrahieren eines in einer Kapsel enthaltenen Extraktionsgutes wie z. B. Kaffee, die aus zwei zur Bildung einer Extraktionskammer dichtend gegeneinander pressbaren Kammerteilen sowie aus Mitteln zum Penetrieren der Kapsel und zum Durchleiten des Extraktionsmittels durch die geschlossene Extraktionskammer besteht. Ein Kammerteil ist dabei als Kapselhalter mit einer Kavität zur Aufnahme eine Kapsel und das andere Kammerteil als Verschlussteil zum Verschliessen der Kavität ausgebildet. Der Kapselhalter ist über ein manuell oder motorisch antreibbares Getriebe in dieser Reihenfolge zwischen einer Aufnahmestellung zur Aufnahme der Kapsel, einer Schliessstellung zum Verschliessen der Kavität, einer Auswurfstellung zum Auswerfen der Kapsel und zurück in die Aufnahmestellung schwenkbar. Ausserdem legt der Kapselhalter zwischen der Aufnahmestellung und der Auswurfstellung einen Schwenkwinkel von mehr als 90° zurück.

Die gattungsgemäße Brühvorrichtung bzw. das gattungsgemäße Verfahren sind aus dem Stand der Technik bekannt. Die gattungsgemäße Brühvorrichtung bzw. das gattungsgemäße Verfahren haben jedoch den Nachteil, dass gelegentlich auf dem Espresso eine unerwünschte großblasige Crema entsteht.

Es war deshalb die Aufgabe der vorliegenden Erfindung, ein Verfahren zur Verfügung zu stellen, die/das die Nachteile des Standes der Technik nicht aufweist.

Gelöst wird die Aufgabe mit dem Gegenstand des Anspruchs 1.

Die vorliegende Erfindung betrifft eine Brühvorrichtung mit einer Brühkammer zum Extrahieren und/oder Lösen einer in einer Portionskapsel vorgesehenen Substanz. Bei dieser Substanz kann es sich beispielweise um Kaffee, Tee, Milch, Kakao und/oder einem sonstigen Lebensmittel handeln. Die Brühkammer weist ein erstes und ein zweites Brühkammerelement auf, wobei ein Brühkammerelement vorzugsweise ortsfest vorgesehen ist, und das zweite Brühkammerelement von einer Ladestellung, in welcher die beiden Brühkammerelemente voneinander beabstandet vorgesehen sind, in eine Extraktionsstellung, in welcher das erste und das zweite Brühkammerelement zur Bildung einer im Wesentlichen geschlossenen Brühkammer aneinander angenähert sind, bewegbar ist. In der Ladestellung wird die Portionskapsel in die Brühvorrichtung eingeführt und in der Extraktionsstellung erfolgt die Herstellung des Getränks und/oder Lebensmittel durch Lösen und/oder Extrahieren der Substanz, die sich in der Portionskapsel befindet.

Erfindungsgemäß weit jedes dieser Brühkammerelemente jeweils ein Perforationsmittel auf, wobei mit dem ersten Perforationsmittel, das vorzugsweise an dem bewegbaren Brühkammerelement vorgesehen ist, der Kapseldeckel und mit dem zweiten Perforationsmittel, das vorzugsweise an dem vorzugsweise stationären stationären Brühkammerelement vorgesehen ist, insbesondere der Bodenbereich der Kapsel anstechbar ist. Durch die beiden Perforationen der zuvor hermetisch geschlossenen Portionskapsel kann die Portionskapsel von einem Extraktions- und/oder Lösemittel, beispielsweise heißem Wasser, durchströmt werden.

Weiterhin erfindungsgemäß weist die Brühvorrichtung nun ein drittes Perforationsmittel auf, das eine Entlüftungsöffnung in den Kapselboden einbringt. Durch diese Entlüftungsöffnung kann ein Gas, beispielsweise Luft, das sich in der Portionskapsel befindet, beim Flüssigkeitseinlauf gezielt aus der Portionskapsel herausgedrückt werden. Dadurch entsteht anfangs kein Überdruck in der Kapsel, und großblasige Crema auf dem Espresso wird verhindert. Sobald jedoch das Gas zumindest weitgehend aus der Portionskapsel entgast ist, baut sich ein entprechender Druck in der Portionskapsel auf, der beispielsweise für die Bildung von einer feinblasigen Crema benötigt wird.

Vorzugsweise befindet sich das dritte Perforationsmittel in dem Brühkammerelement, das das Perforationsmittel zur Perforierung des Bodenbereichs aufweist.

Vorzugsweise ist das dritte Perforationsmittel oberhalb des Flüssigkeitsablaufs, durch den die das Extrat aufweisende Flüssigkeit in einen Auffangbehälter läuft, angeordnet.

Weiterhin bevorzugt ist das zweite Perforationsmittel, das vorzugsweise die Ablauföffnung in die Portionskapsel einbringt, unterhalb des dritten Perforationsmittels und vorzugsweise oberhalb des ersten Perforationsmittels, das vorzugsweise die Zulauföffnung(en) in die Portionskapsel, insbesondere deren Deckelfolie einbringt, vorgesehen. Dadurch wird eine Portionskapsel, deren Symmetrieachse beim Extrahieren/Lösen vorzugsweise im Wesentlichen horizontal vorgesehen ist, gezielt entlüftet und/oder es entsteht zumindest teilweise eine aufwärts gerichtete Strömung in der Portionskapsel.

Ein weiterer Gegenstand der vorliegenden Erfindung ist ein Verfahren zum Extrahieren und/oder Lösen einer Substanz, die in einer Perforationskapsel vorgesehen ist, wobei die Portionskapsel auf ihrer Zulaufseite und auf ihrer Ablaufseite geöffnet wird, wobei die Portionskapsel gleichzeitig oder nachfolgend mit einer separaten Entlüftungsöffnung versehen wird.

Die zu der erfindungsgemäßen Brühvorrichtung gemachten Ausführungen gelten für das erfindungsgemäße Verfahren gleichermaßen und umgekehrt.

Auch das erfindungsgemäße Verfahren hat den Vorteil, dass durch die Anordnung einer Entlüftungsöffnung eine grobblasige Crema vermieden wird. Vorzugsweise ist die Zulaufseite, d.h. die Seite der Portionskapsel, die von dem Extraktionsmittel/Lösemittel angeströmt wird, die Seite, auf der die Deckelfolie an der Portionskapsel angebracht ist. Weiterhin bevorzugt ist die Ablaufseite, d.h. die Seite der Portionskapsel, von der das fertiggestellte Getränk und/oder Lebensmittel abläuft der Bodenbereich der Portionskapsel.

Erfindungsgemäß strömt auf der Zulaufseite der Portionskapsel eine Flüssigkeit in die Portionskapsel ein, und die Portionskapsel wird im Wesentlichen gleichzeitig durch die Entlüftungsöffnung entlüftet. Das zu entlüftende Gas strömt dabei vorzugsweise durch denselben Kanal in die Umgebung wie das herzustellende Getränk/Lebensmittel.

Erfindungsgemäß bevorzugt baut sich nach oder beim Entlüften ein Druck in der Portionskapsel auf, der dafür sorgt, dass sich die Entlüftungsöffnung nach dem Entlüften zumindest teilweise verschließt. Dadurch wird sichergestellt, dass die Flüssigkeit durch die dafür vorgesehene Öffnung und nicht durch die Entlüftungsöffnung strömt. Dadurch wird sichergestellt, dass beispielsweise eine gewünschte feinblasige Crema auf einem Espresso gebildet wird.

Im Folgenden wird die Erfindung anhand der Figuren 1 bis 6 erläutert. Diese Erläuterungen sind lediglich beispielhaft und schränken den allgemeinen Erfindungsgedanken nicht ein. Die Erläuterungen gelten für beide Gegenstände der vorliegenden Erfindung gleichermaßen.
Figuren 1 bis 4 zeigen unterschiedliche Sequenzen des Schließens der Brühvorrichtung.
Figur 5 zeigt das Entlüften der Portionskapsel.
Figur 6 zeigt das Ausströmen des Extrats.

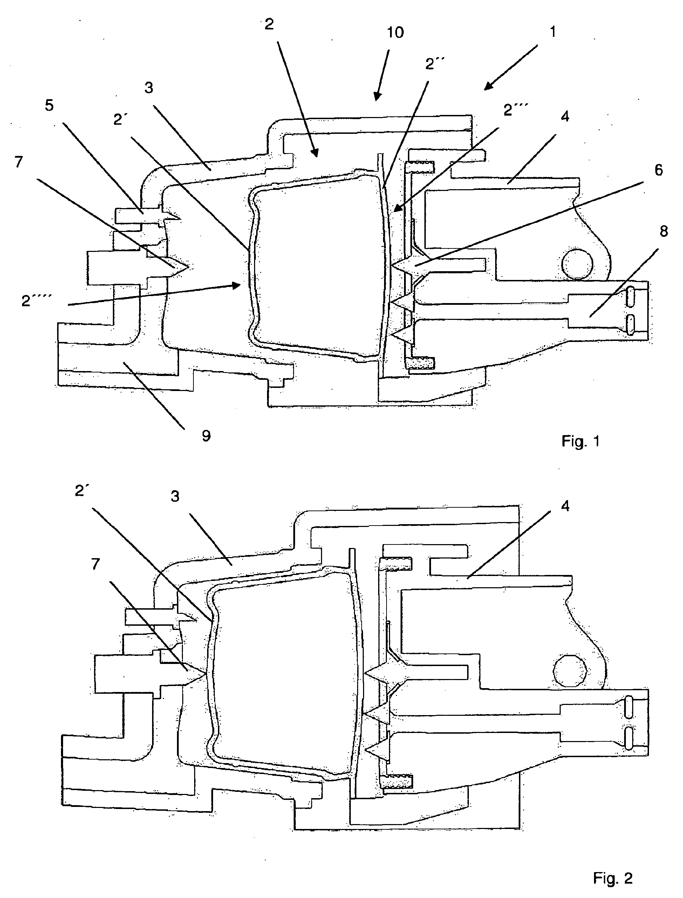

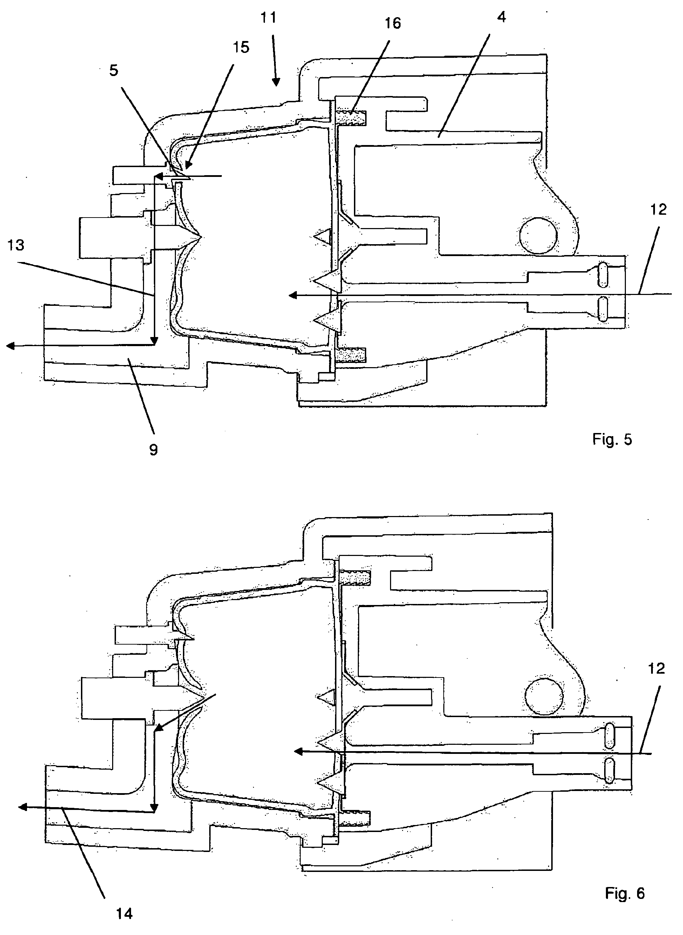

Figur 1 zeigt die Brühkammer einer erfindungsgemäßen Brühvorrichtung zur Herstellung von Kaffee, Espresso, Milch, Kakao oder dergleichen unter Verwendung einer Portionskapsel (2), die einen Bodenbereich (2') und einen Kapseldeckel (2") aufweist. In der hermetisch geschlossenen Portionskapsel befindet sich die zu extrahierende oder zu lösende Substanz. Die Brühkammer besteht aus einem ersten vorzugsweise ortsfesten Brühkammerelement (3) und einem zweiten vorzugsweise beweglichen Brühkammerelement (4), das von einer Ladestellung (nicht dargestellt), in der die Portionskapsel in die geöffnete Brühkammer eingeführt wird, nach links in eine Extraktionsstellung (vgl. Figur 5) überführbar ist, besteht. Das erste Brühkammerelement (3) weist ein zweites Perforationsmittel (7) auf, mit dem der Kapselboden (2') eingestochen wird. An dem zweiten Brühkammerelement (4) ist das erste Perforationsmittel (6) angeordnet, das in dem vorliegenden Fall als Perforationsplatte hier mit drei Dornen ausgebildet ist. Mit diesem Perforationsmittel (6) wird der Kapseldeckel perforiert, so dass ein Extraktions- oder Lösemittel, insbesondere heißes Wasser, das über den Zulaufkanal (8) in die Brühkammer strömt, in die Portionskapsel (1) gelangen kann und dort entweder das Produkt extrahiert oder löst. Das so fertiggestellte Getränk oder Lebensmittel läuft dann an dem zweiten Perforationsmittel (7) vorbei in einen Ablaufkanal (9) und von dort in einen Auffangbehälter, beispielsweise einen Becher oder eine Tasse.

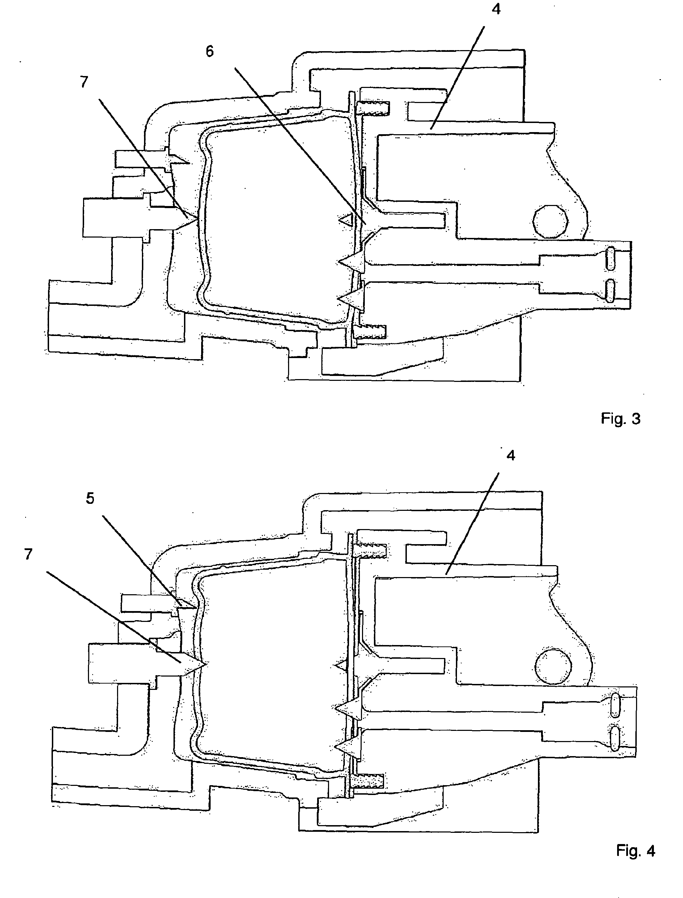

Während der Überführung des zweiten Brühkammerelementes von der Lade- in die Extraktionsstellung wird die Portionskapsel (2) in das erste Brühkammerelement hinein gedrückt, bis der Boden (2') der Portionskapsel (2) an dem zweiten Perforationsmittel (7) anliegt (vgl. Figur 2). Bei einer weiteren Bewegung des zweiten Brühkammerelementes (4) nach links bleibt die Stellung der Portionskapsel (2) im Wesentlichen unverändert und die ersten Perforationsmittel (6) perforieren den Kapseldeckel (2"), was in Figur 3 dargestellt ist. Bei einer weiteren Bewegung des zweiten Brühkammerelementes nach links, wie in Figur 4 dargestellt, perforiert das zweite Perforationsmittel (7) den Kapselboden (2') und nachfolgend und/oder gleichzeitig erzeugt das dritte Perforationsmittel (5) in dem Kapselboden (2') die Entlüftungsöffnung (15). In diesem Zustand ist die Brühkammer vollständig geschlossen und die Dichtung (16) dichtet das zweiten Brühkammerelement (4) gegen den Kapseldeckel (2") ab. Dadurch wird beispielsweise heißes Wasser, das durch den Zulaufkanal (8) strömt, in die Kapsel (2) eingeleitet und verdrängt aus dieser via der Entlüftungsöffnung (15) Luft oder ein sonstiges Gas aus der Portionskapsel, das sodann durch den Ablaufkanal (9) in die Umgebung entweicht (vgl. Figur 5). Durch die Entlüftung der Portionskapsel (2) kann sich beim Pumpenstart und beim Einströmen der Flüssigkeit (12) in die Portionskapsel kein nennswerter Druck aufbauen, so dass es nicht zu einer grobblasigen Crema kommt. Erst wenn die Portionskapsel (2) zumindest weitgehend entlüftet ist, erfolgt ein nennswerter Druckaufbau in der Portionskapsel. Durch diesen Druckaufbau in der Portionskapsel wird die Entlüftungsöffnung (15) wieder zumindest weitgehend verschlossen und das Extrat und/oder das fertiggestellte Getränk wird über den Flüssigkeitsablauf in den Auffangbehälter geleitet (vgl. Figur 6). Dieses Getränk weist eine sehr feinblasige Crema auf.

### Bezugszeichenliste

- 1: Brühkammer
- 2: Portionskapsel
- 2': Bodenbereich der Portionskapsel
- 2": Kapseldeckel
- 2''': Zulaufseite
- 2'''': Ablaufseite
- 3: Erstes Brühkammerelement
- 4: Zweites Brühkammerelement
- 5: Entlüftungsmittel, drittes Perforationsmittel
- 6: Erstes Perforationsmittel
- 7: Zweites Perforationsmittel
- 8: Zulaufkanal
- 9: Ablaufkanal
- 10: Ladestellung
- 11: Extraktionsstellung
- 12: Flüssigkeitszulauf, Wasserzulauf
- 13: Entlüftungsströmung
- 14: Flüssigkeitsablauf, Getränkeablauf
- 15: Entlüftungsöffnung
- 16: Dichtung

## Patentansprüche

1. Verfahren zum Extrahieren und/oder Lösen einer Substanz, die in einer Portionskapsel (2) vorgesehen ist, wobei die Portionskapsel (2) auf ihrer Zulaufseite (2''') und auf ihrer Ablaufseite (2'''') geöffnet wird, wobei sie gleichzeitig oder nachfolgend mit einer separaten Entlüftungsöffnung (15) versehen wird, auf der Zulaufseite der Portionskapsel (2) eine Flüssigkeit in die Portionskapsel (2) einströmt und die Portionskapsel im Wesentlichen gleichzeitig durch die Entlüftungsöffnung (15) entlüftet wird **dadurch gekennzeichnet, dass** nach dem oder beim Entlüften der Druck in der Portionskapsel steigt und dadurch die Entlüftungsöffnung (15) zumindest teilweise verschließt.

## Claims

1. Method for extracting and/or dissolving a substance which is provided in a portion capsule (2), wherein the portion capsule (2) is opened on its inlet side (2''') and on its outlet side (2''''), wherein it is provided at the same time or subsequently with a separate venting opening (15), a liquid flows into the portion capsule (2) on the inlet side of the portion capsule (2) and the portion capsule is vented substantially at the same time through the venting opening (15), **characterized in that** following or during venting, the pressure in the portion capsule rises and as a result at least partially closes the venting opening (15).

## Revendications

1. Procédé pour extraire et/ou dissoudre une substance qui est disposée dans une capsule dosette (2), la capsule dosette (2) étant ouverte sur son côté d'alimentation (2''') et sur son côté d'écoulement (2''''), étant pourvue en même temps ou ensuite d'une ouverture de ventilation séparée (15), un liquide entrant dans la capsule dosette (2) du côté d'alimentation de la capsule dosette (2) et la capsule dosette étant ventilée par l'ouverture de ventilation (15) essentiellement simultanément, **caractérisé en ce qu'**après la ventilation ou au cours de celle-ci, la pression dans la capsule dosette augmente et de ce fait l'ouverture de ventilation (15) se ferme au moins en partie.
